(19) Europäisches Patentamt
European Patent Office
Office européen des brevets

(11) EP 0 176 989 B2

(12) **NEW EUROPEAN PATENT SPECIFICATION**

(45) Date of publication and mention of the opposition decision:
**14.05.1997 Bulletin 1997/20**

(45) Mention of the grant of the patent:
**19.04.1989 Bulletin 1989/16**

(21) Application number: **85112303.4**

(22) Date of filing: **27.09.1985**

(51) Int Cl.[6]: **C08L 81/06**, C08L 65/00, C08L 71/00

(54) **Molded articles manufactured from blends of a biphenyl containing poly(aryl ether sulfone) and a poly(aryl ether ketone)**

Formkörper aus Abmischungen eines Biphenylgruppen enthaltenden Poly(arylethersulfons) und eines Poly(aryletherketons)

Articles moulés préparés à partir de mélanges d'une poly(aryléther-sulfone) contenant des groupes biphényle et d'une poly(aryléther-cétone)

(84) Designated Contracting States:
**AT BE CH DE FR GB IT LI NL SE**

(30) Priority: **28.09.1984 US 655580**

(43) Date of publication of application:
**09.04.1986 Bulletin 1986/15**

(73) Proprietor: **AMOCO CORPORATION**
**Chicago Illinois 60680 (US)**

(72) Inventors:
- **Harris, James Elmer**
  **Piscataway New Jersey 08854 (US)**
- **Robeson, Lloyd Mahlon**
  **Whitehouse Station New Jersey 08889 (US)**

(74) Representative: **Barz, Peter, Dr. et al**
**Patentanwalt**
**Kaiserplatz 2**
**80803 München (DE)**

(56) References cited:
**EP-A- 0 059 077** **EP-A- 0 062 830**
**EP-A- 0 133 907** **EP-A- 0 138 128**
**GB-A- 1 446 962** **GB-A- 2 116 990**
**US-A- 3 634 355** **US-A- 4 008 203**
**US-A- 4 247 682**

- **ISO International Standart 472, pp 54, 55 (1979)**
- **Dict. of Scient. and Techn. Terms, pp 506 and 526, McGraw Hill**
- **Enc. of Pol. Science + Techn., Vol.11, pp 447-463 (1969)**
- **Plastverarbeiter 33, 1099-1101, (1978)**

Remarks:
The file contains technical information submitted after the application was filed and not included in this specification

EP 0 176 989 B2

## Description

Described herein are molded articles manufactured from blends comprising a biphenyl containing poly(aryl ether sulfone) and a poly(aryl ether ketone). These blends have limited miscibility and excellent mechanical compatibility. These articles possess a good balance of properties including higher modulus, impact resistance, solvent resistance and resitance to environmental stress cracking.

Poly(aryl ether ketones) offer an exceptional balance of properties; namely, high melting point, excellent thermal stability, excellent hydrolytic stability, high stiffness and strength, good toughness, and excellent solvent and environmental stress rupture resistance. However, the high melting point (>300°C) of poly(aryl ether ketones) seriously limits the number of polymeric systems which can be considered for blending. Further, the somewhat low glass transition temperature (Tg) of these materials (<170°C) limits their use in several applications such as composites, bearings and seals, and electrical connectors. This is primarily because of the loss in modulus as the Tg is traversed.

Polymer blends have been widely taught and employed in the art. As broad as this statement may be, the blending of polymers remains an empirical art and the selection of polymers for a blend giving special properties is, in the main, an Edisonian-like choice. Certain attributes of polymer blends are more unique than others. The more unique attributes when found in a blend tend to be unanticipated properties.

(A) According to Zoller and Hoehn, Journal of Polymer Science, Polymer Physics Edition, vol. 20, pp. 1385-1397 (1982)-

"Blending of polymers is a useful technique to obtain properties in thermoplastic materials not readily achieved in a single polymer. Virtually all technologically important properties can be improved in this way, some of the more important ones being flow properties, mechanical properties (especially impact strength), thermal stability, and price.

... Ultimately, the goal of such modeling and correlation studies should be the prediction of blend properties from the properties of the pure components alone. We are certainly very far from achieving this goal."

In the field of miscibility or compatibility of polymer blends, the art has found predictability to be unattainable, even though considerable work on the matter has been done.

According to authorities:

(B) "It is well known that compatible polymer blends are rare." Wang and Cooper, Journal of Polymer Science, Polymer Physics Edition, vol. 21, p. 11 (1983).

(C) "Miscibility in polymer-polymer blends is a subject of widespread theoretical as well as practical interest currently. In the past decade or so the number of blend systems that are known to be miscible has increased considerably. Moreover, a number of systems have been found that exhibit upper or lower critical solution temperatures, i.e., complete miscibility only in limited temperature ranges. Modern thermodynamic theories have had limited success to date in predicting miscibility behavior in detail. These limitations have spawned a degree of pessimism regarding the likelihood that any practical theory can be developed that can accommodate the real complexities that nature has bestowed on polymer-polymer interactions." Kambour, Bendler, Bopp, Macromolecules, 1983, 16, 753.

(D) "The vast majority of polymer pairs form two-phase blends after mixing as can be surmised from the small entropy of mixing for very large molecules. These blends are generally characterized by opacity, distinct thermal transitions, and poor mechanical properties. However, special precautions in the preparation of two-phase blends can yield composites with *superior* mechanical properties. These materials play a major role in the polymer industry, in several instances commanding a larger market than either of the pure components." Olabisi, Robeson and Shaw, Polymer-Polymer Miscibility, 1979, published by Academic Press, New York, N.Y., p. 7.

(E) "It is well known that, regarding the mixing of thermoplastic polymers incompatibility is the rule and miscibility and even partial miscibility is the exception. Since most thermoplastic polymers are immiscible in other thermoplastic polymers, the discovery of a homogeneous mixture or partially miscible mixture of two or more thermoplastic polymers is, indeed, inherently unpredictable with any degree of certainty, for example, see P. J. Flory, *Principles of Polymer Chemistry,* Cornell University Press, 1953, Chapter 13, page 555." *Younes,* U.S. Patent No. 4,371,672.

(F) "The study of polymer blends has assumed an ever-increasing importance in recent years and the resulting research effort has led to the discovery of a number of miscible polymer combinations. Complete miscibility is an unusual property in binary polymer mixtures which normally tend to form phase-separated systems. Much of the work has been of a qualitative nature, however, and variables such as molecular weight and conditions of blend preparation have often been overlooked. The criteria for establishing miscibility are also varied and may not always all be applicable to particular systems." Saeki, Cowie and McEwen, Polymer, 1983, vol. 24, January, p. 60.

Blends of poly(aryl ether ketones) and poly(aryl ether sulfones) have been briefly alluded to in the patent literature. British Patent No. 1,446,962 (page 3, lines 28 to 32) states

"The aromatic polyether ketone may be blended with other thermoplastic polymeric substances, for example, polyesters, polyolefins, polyamides, polysulfones, and poly(vinyl chloride). The composition may be further mixed with particles; e.g., elastomeric materials and polytetrafluoroethylene."

This disclosure generally describes blends of poly(aryl ether ketones) and poly(aryl ether sulfones). However, the above-quoted statement contains so many inaccuracies that it is, in essence, not relevant. Blending poly(vinyl chloride) at temperatures >300°C would give instantaneous degradation yielding large quantities of hydrochloric acid as well as other noxious by-products. Polyolefins, polyesters (e.g., poly(ethylene terephthalate), poly(butylene terephthalate) and polyamides (e.g., nylon 6, nylon 6,6, nylon 11, and nylon 12) also will severely degrade at processing temperatures in excess of 300°C and thus produce useless blends with poly(aryl ether ketones).

U.S. Patent No. 3,324,199 describes blends of a specific poly(aryl ketone) containing ortho hydroxy groups (relative to the ketone group). These materials are described as ultraviolet light stabilizers for a variety of polymers including polyethylene, polypropylene, poly(vinyl chloride), poly(vinylidene chloride), polyacrylic acid esters, polyacrylonitrile, polyvinyl fluoride, polyvinylidene fluoride, polytetrafluoroethylene, polychlorotrifluoroethylene, polyesters, polyamides, and polyimides. These poly(aryl ketones) are generally amorphous and require aromatic hydroxyls ortho to the main chain ketones. The poly(aryl ketones) used according to this invention are crystalline, have no ortho hydroxyls, and could not be blended with many of the above mentioned polymers as the melting point of the poly(aryl ether ketones) are higher than the degradation temperature of most of the above cited polymers.

It has been found that the reaction product of biphenol and 4,4'-dichlorodiphenyl sulfone (biphenol based polysulfone) and other poly(ary ether sulfones) containing biphenyls exhibits an interesting property balance and exhibits a limited level of miscibility in blends with poly(aryl ether ketones). The level of intermixing is at least partially responsible for the excellent mechanical properties exhibited by molded articles manufactured from the blends.

This invention is directed to molded articles manufactured from blends comprising a biphenyl containing from 5 to 95 weight percent of poly(aryl ether sulfone) and from 95 to 5 weight percent of a poly(aryl ether ketone) containing no ortho hydr yl group and having a reduced viscosity of at least 0.3 to 5.0dl/g; films and sheets manufactured from a blend of

(a) a poly(aryl ether ketone) containing therein at least 50 weight percent of a repeating unit of formula

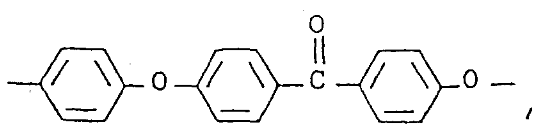

alone or in combination with one or more different repeating units, and

(b) up to 50 weight percent of poly(aryl ether sulfone) having repeating units of the following formulae:

(i) 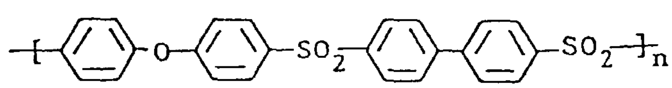

(ii) 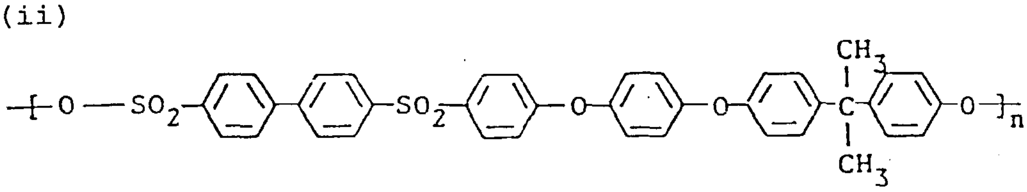

being excluded.

The presence of the biphenyl unit in the poly(aryl sulfone) appears important in obtaining compatibility between the poly(aryl ether sulfone) and poly(aryl ether ketone).

In the blend, the poly(aryl ether sulfone) is used preferably in amounts of from 20 to 75 weight percent while the poly(aryl ether ketone) is used preferably in amounts of up to 80 weight percent.

The Poly(aryl ether sulfones)

The poly(aryl ether sulfones) wich are suitable for use according to this invention contain at least one biphenyl unit in the structure. The preferred biphenyl containing poly(aryl ether sulfone) contains the repeating unit:

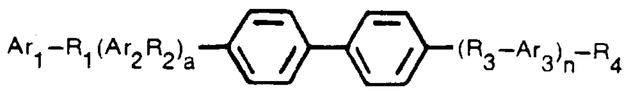

wherein $R_1$ through $R_4$ are -O-, $-SO_2-$,

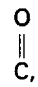

S with the proviso that at least one of $R_1$ through $R_4$ is $-SO_2-$, $Ar_1$ through $Ar_3$ are arylene of 6 to 24 carbon atoms, preferably phenylene or biphenylene; a and n are 0 or 1.

The preferred poly(aryl ether sulfones) include those having the following reoccurring units:

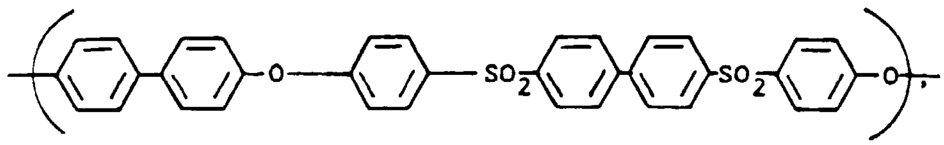

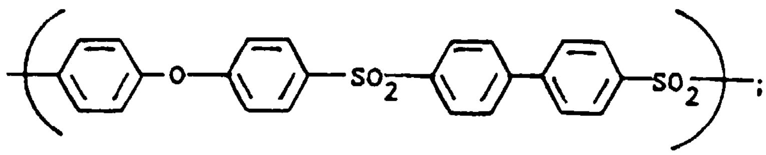

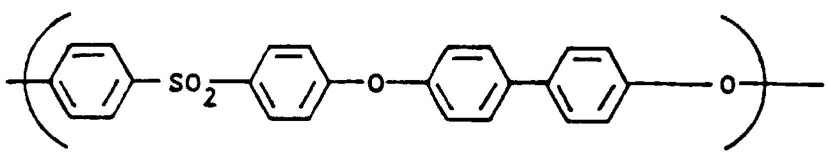

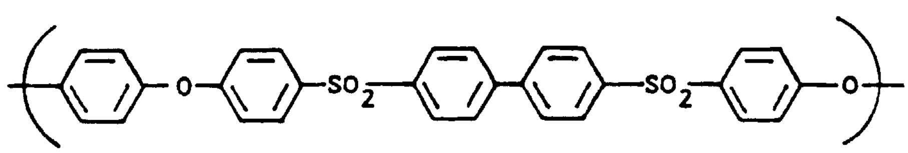

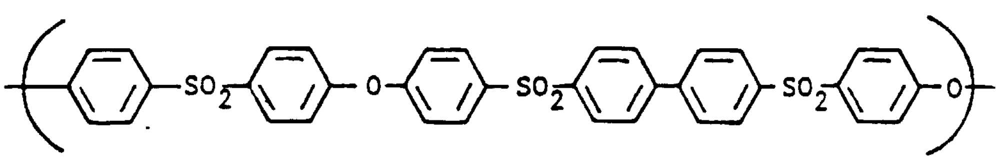

According to special embodiments of this invention the poly(aryl ether sulfone) is a copolymer having the repeating units:

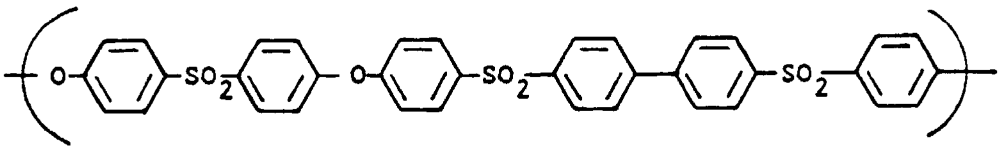

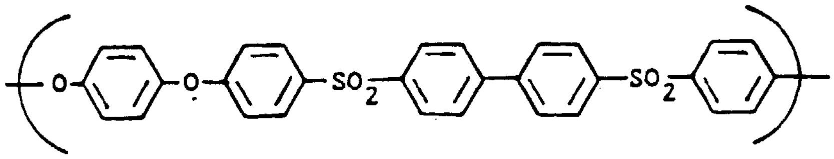

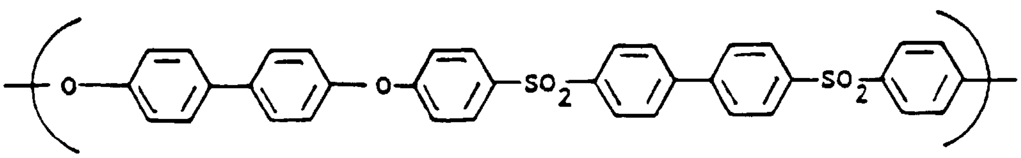

arranged randomly along the chain.

The poly(aryl ether sulfones) are produced by methods well known in the art such as those described in U.S. Patents 3,634,355; 4,008,203; 4,108,837 and 4,175,175.

The Poly(aryl ether ketone)

The crystalline poly(aryl ether ketone)s which are suitable for use herein can be generically characterized as containing a repeating unit of one or more of the following formulae:

(I)

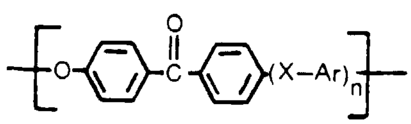

(II)

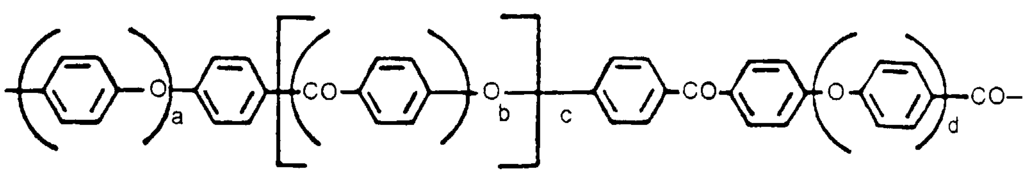

(III)

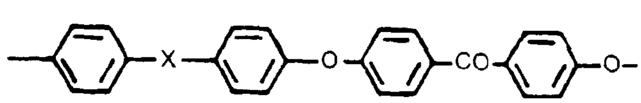

(IV) 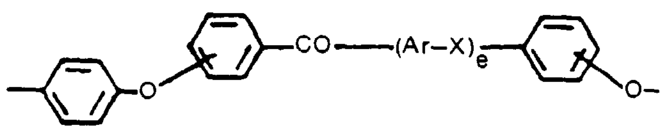

(V) 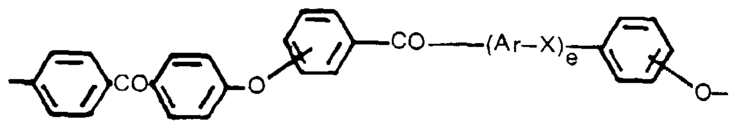

wherein Ar is independently a divalent aromatic radical selected from phenylene, biphenylene or naphthylene, X is independently O,

$$\overset{\text{O}}{\overset{\|}{\text{C}}},$$

or a direct bond and n is an integer of from 0 to 3, b, c, d and e are 0 or 1 and a is an integer of 1 to 4 and preferably d is 0 when b is 1.

Preferred poly(arylketone)s include those having a repeating unit of the formula:

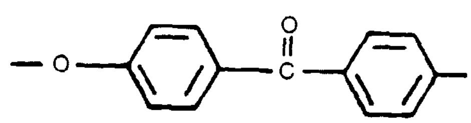

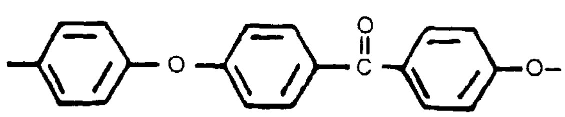

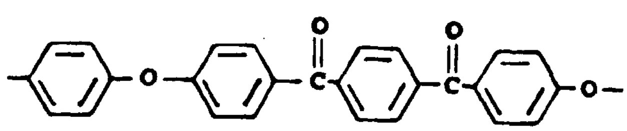

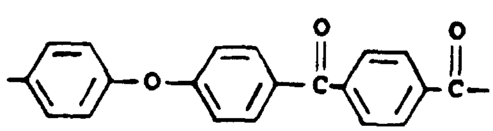

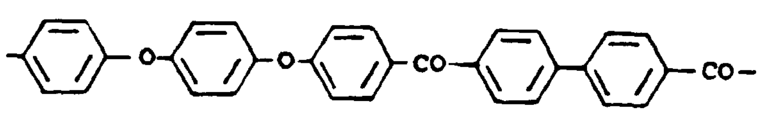

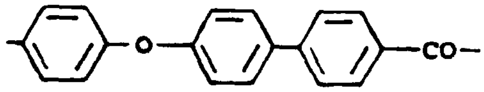

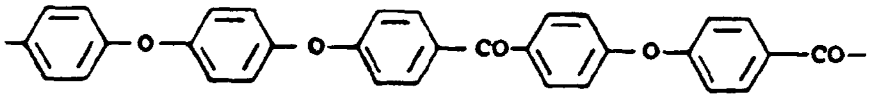

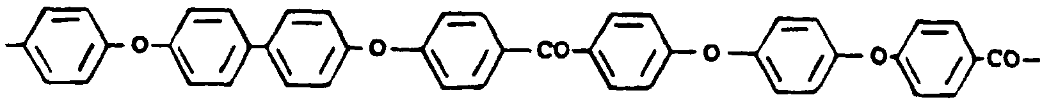

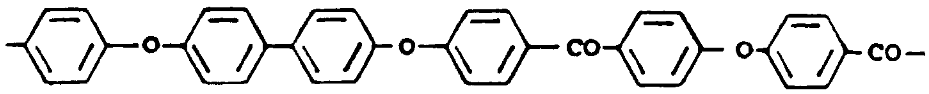

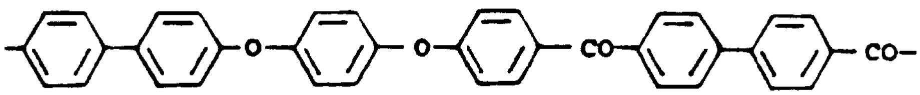

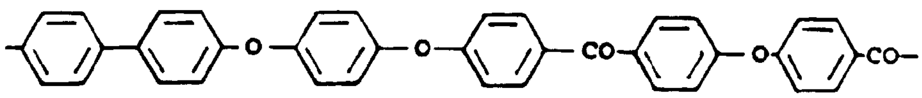

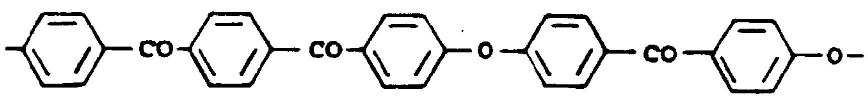

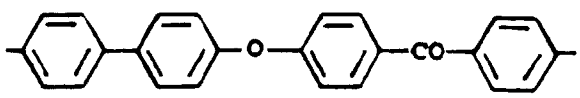

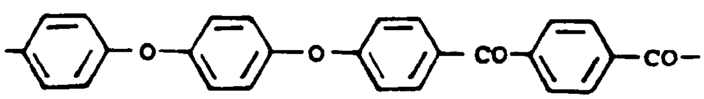

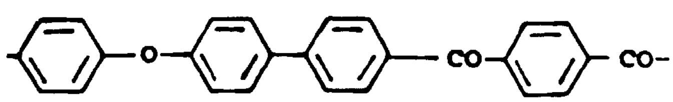

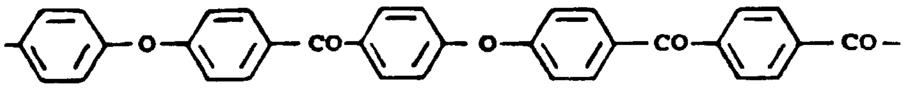

These poly(aryl ketone)s are prepared by methods well known in the art. One such method comprises heating a substantially equimolar mixture of at least one bisphenol and at least one dihalobenzoid compound or at least one halophenol compound as described in Canadian Patent 847,963. Preferred bisphenols in such a process include:

hydroquinone,
4,4'-dihydroxybenzophenone,
4,4'-dihydroxybiphenyl, and
4,4'-dihydroxydiphenyl ether.

Preferred halo and dihalobenzoid compounds include:

4-(4-chlorobenzoyl)phenol,
4,4'-difluorobenzophenone,
4,4'-dichlorobenzophenone,
4-chloro-4'-fluorobenzophenone,

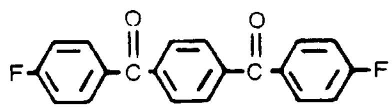

and

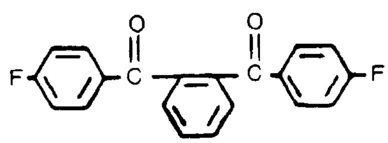

The poly(aryl ketone)s may be produced by the process as described in, for example, U.S. Patent 4,176,222. This process comprises heating in the temperature range of 100° to 400°C, (i) a substantially equimolar mixture of (a) at least one bisphenol and (b) at least one dihalobenzoid compound, or (ii) at least one halophenol, in which in the dihalobenzenoid compound or halophenol, the halogen atoms are activated by -CO- groups ortho or para thereto, with a mixture of sodium carbonate or bicarbonate and a second alkali metal carbonate or bicarbonate, the alkali metal of said second alkalim metal carbonate or bicarbonate having a higher atomic number than that of sodium, the amount of said second alkali metal carbonate or bicarbonate being such that there are 0.001 to 0.5 gram atoms of said alkali metal of higher atomic number per gram atom of sodium, the total amount of alkali metal carbonate or bicarbonate being such that there is at least one alkali metal atom for each phenol group present, and thereafter separating the polymer from the alkali metal halide.

Also, poly(aryl ketone)s such as those containing repeating units of the formula:

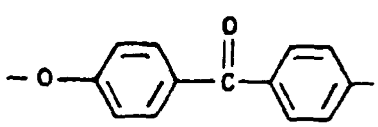

may be produced by Friedel-Craft reactions utilizing hydrogen fluoride-boron trifluoride catalysts as described, for example, in U.S. Patent 3,953,400.

Additionally, poly(aryl ketones) of the following formula:

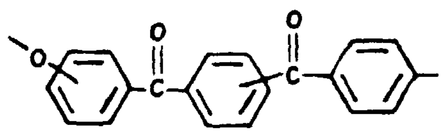

may be prepared by Friedel-Craft reactions using a boron fluoride-hydrogen fluoride catalyst as described in, for example, U.S. Patents 3,441,538; 3,442,857 and 3,516,966.

The polyketones may also be prepared according to the process as described in, for example, U.S. Defensive Publication T 103,703 and U.S. Patent 4,396,755. In this process, reactants such as (a) an aromatic monocarboxylic acid, (b) a mixture of at least one aromatic dicarboxylic acid, and (c) combinations of (a) and (b) are reacted in the presence of a fluoroalkane sulphonic acid, particularly trifluoromethane sulphonic acid.

Additionally, poly(aryl ether ketone)s of the following formulas:

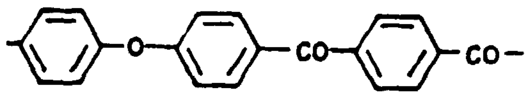

may also be prepared according to the process as described in, for example, U.S. Patent 4,398,020. In such a process,

(a) a mixture of substantially equimolar amounts of

(i) at least one aromatic diacyl halide of the formula

YOC-Ar-COY

where -Ar- is a divalent aromatic radical, Y is halogen and COY is an aromatically bound acyl halide group, which diacyl halide is polymerizable with at least one aromatic compound of (a)(ii), and

(ii) at least one aromatic compound of the formula

H-Ar'-O Ar-H

wherein -Ar'- is a divalent aromatic radical and H is an aromatically bound hydrogen atom, which compound is polymerizable with at least one diacyl halide of (a)(i), and

(b) at least on aromatic monoacyl halide of formula

H-Ar"-COW

where -Ar"- is a divalent aromatic radical and H is an aromatically bound hydrogen atom, W is halogen, and COW is aromatically bound acyl halide group, which monoacyl halide is self-polymerizable, and

(c) a combination of (a) and (b) in the presence of a fluoroalkane sulphonic acid are reacted.

The term poly(aryl ether ketone) as used herein is meant to include homopolymers, copolymers, terpolymers, block copolymers, and graft copolymers. For example, any one or more of the repeating units (I) to (V) may be combined to form copolymers, etc.

The poly(aryl ether ketone)s have a reduced viscosity of 0.3 to 5.0 dl/g, as measured in concentrated sulphuric acid at 25°C.

It should, of course, be obvious to those skilled in the art that other additives may be included in the molded articles of this invention. These additives include plasticizers; pigments; flame retardants; reinforcing agents, such as glass fibers; thermal stabilizers; ultraviolet light stabilizers; impact modifiers, and the like.

The molded articles may be used to mold gears, bearings, and the like.

EXAMPLES

The following examples serve to give specific illustrations of the practice of this invention but they are not intended in any way to limit the scope of this invention.

The following designations are used in the examples and they have the following meaning:

*Polyketone I:* A polymer having a repeating unit of the formula:

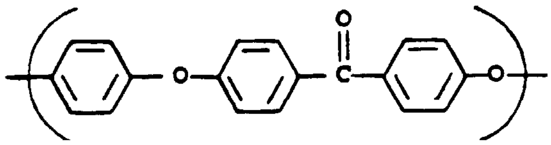

having a reduced viscosity of 1.2 dl/g as measured in 96% sulfuric acid (1 wt. % solution) at 25°C (PEEK obtained from Imperial Chemicals Co.)

*Polyketone II:* A polymer having a repeating unit of the formula:

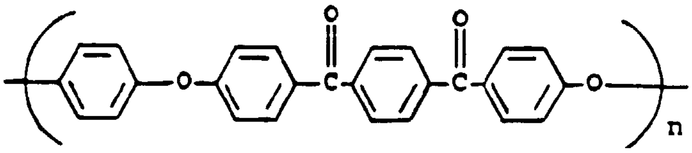

having a reduced viscosity of 1.1 dl/g as measured at 1 wt. % in 96 wt. % sulfuric acid at 25°C.

*Polysulfone I:* A polymer having a repeating unit of the formula:

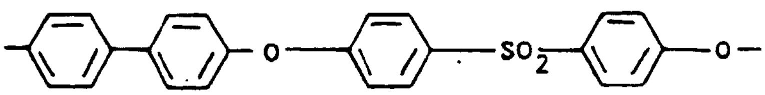

having a reduced viscosity of 0.59 dl/g as measured in N-methylpyrrolidone at 25°C (0.2 gr/100 ml).

*Polysulfone II:* A polymer having a repeating unit of the formula:

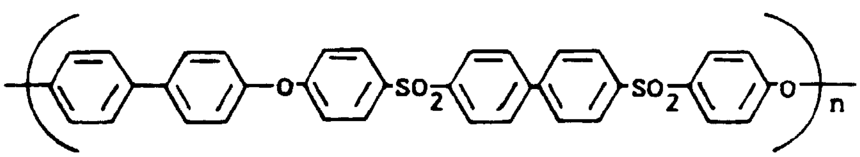

having a reduced viscosity of 0.51 dl/g as measured in N-methyl pyrrolidone at 25°C (0.2 gr/100 ml).

*Polysulfone III:* A polymer having a repeating unit of the formula:

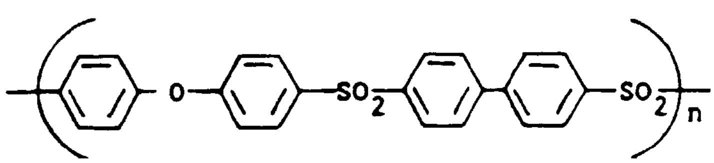

having a melt flow of 0.68 dg/minutes at 0,303 MPa (44 psi) and 400°C (ASTM D-1238).

*Polysulfone IV:* A random copolymer having repeating units of

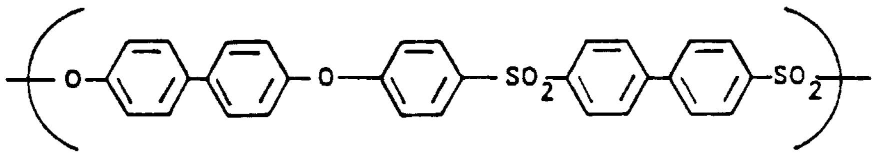

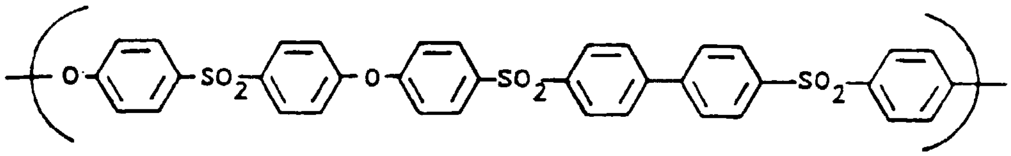

in a ratio of 75/25 and having an R.V. of 0.42 dl/g as measured in N-methyl pyrrolidone (0.2 gr/100 ml solution at 25°C).

*Control Polysulfone:* A polymer having a repeating unit of the formula:

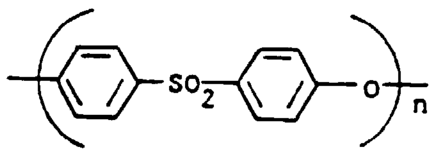

having a reduced viscosity of 0.48 dl/g as measured in N-methyl pyrrolidone (0.2 gr/100 ml) at 25°C.

*Polyetherimide:* A polymer having a repeating unit of the formula:

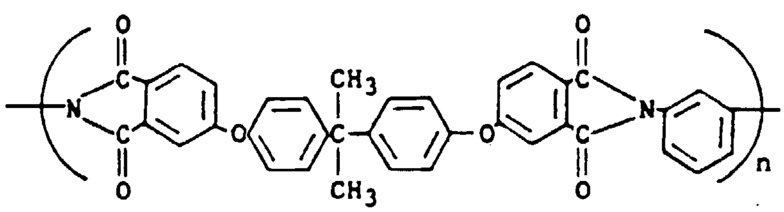

having a reduced viscosity of 0.51 dl/g as measured in chloroform (0.2 g/100 ml) 25°C.

Example 1

90 weight percent of Polysulfone I and 10 weight percent of Polyketone I were blended in a 36/1 LID 2,54 cm (one inch) extruder with two fluted mixing sections at 360°C. The properties were obtained on tensile specimens injection molded in a 35,4 g (1¼ oz) Newburg screw injection molding machine at 380°C. Properties were determined as per ASTM tests:

| | ASTM |
|---|---|
| Tensile Modulus | D-638 |
| Tensile Strength | D-638 |
| % Elongation | D-638 |
| Notched Izod Impact Strength | D-256 |

(continued)

| | ASTM |
|---|---|
| Tensile Impact Strength | D-1822 |
| Heat Distortion Temperature | D-648 |
| Flexural Modulus | D-790 |
| Flexural Strength | D-790 |
| The properties are shown in Table I. | |

Examples 2 to 4

The procedure of Example 1 was exactly repeated except that the components of the blend were the following:

Example 2

80 weight % Polysulfone I
20 weight % Polyketone I

Example 3

65 weight % Polysulfone I
35 weight % Polyketone I

Example 4

50 weight % Polysulfone I
50 weight % Polyketone I

The results are shown in Table I.

It can be seen that the addition of Polysulfone I to Polyketone I in the amount of at least 50% improves the heat deflection temperature of the latter.

TABLE I

| | Polysulfone I | Polyketone I | 90% Polysulfone I 10% Polyketone I | 80% Polysulfone I 20% Polyketone I | 65% Polysulfone I 35% Polyketone I | 50% Polysulfone I 50% Polyketone I |
|---|---|---|---|---|---|---|
| Tensile Modulus MPa (psi) | 2289.5 (332,000) | 3634.2 (527,000) | 2289.5 (332,000) | 2358.4 (342,000) | 2468.8 (358,000) | 2854.9 (414,000) |
| Tensile Strength MPa (Psi) | 72.4 (10,500) | 90.3 (13,100) | 80.7 (11,700) | 80.7 (11,700) | 81.1 (11,800) | 79.3 (11,500) |
| % Elongation | 98 | 75 | 105 | 103 | 117 | 90 |
| Notched Izod Impact Strength Nm/cm (ft-lbs/in of notch) | 7.4 (13.8) | 0.7 (1.3) | 7.6 (14.2) | 8.3 (15.5) | 2.8 (5.2) | 1.4 (2.6) |
| Tensile Impact Strength Nm/cm² (ft-lbs/in²) | 51.1 (243) | 19.7 (94) | 32.8 (156) | 39.7 (189) | 36.8 (175) | 29.0 (138) |
| Heat Distortion Temperature 1.8 MPa (264 psi) 3.18 mm (⅛" bar) | 196°C | 145°C | | | | 155°C |
| Flexural Modulus MPa (psi) | 2275.7 (330,000) | | 2406.7 (349,000) | 2489.5 (361,000) | 2586.0 (375,000) | 2841.2 (412,000) |
| Flexural Strength MPa(psi) at 5% Strain | 85.5 (12,400) | | 92.4 (13,400) | 95.9 (13,900) | 100.0 (14,500) | 110.3 (16,000) |

Samples of Examples 1 to 4 were compression molded at 360°C in a cavity mold into 0,5 mm (20 mil) thick 10.16 × 10.16 cm (4 × 4 inch) plaques.

0.5 mm (20 mil) strips 3.18 mm (⅛") wide were shear cut from the compression molded specimens. The samples were loaded in tension using lever-arm weighting arrangement. A cotton swab was placed on the center of the specimen and saturated with the test environment at time zero. The time to rupture was determined unless the sample did not rupture in 2 hours; then the qualitative characteristic of the sample was noted (e.g., crazing and embrittlement).

The environmental stress rupture results are shown in Table II. It is seen that the addition of Polyketone I to Polysulfone I improves the environmental stress rupture resistance of the latter, particularly when the polyketone is present in amounts greater than 20% by weight.

TABLE II

Environmental Stress Rupture Results

| Environment | Stress | Polysulfone I | 90% Polysulfone I 10% Polyketone I | 80% Polysulfone I 20% Polyketone I | 65% Polysulfone I 35% Polyketone I | 50% Polysulfone I 50% Polyketone I |
|---|---|---|---|---|---|---|
| | | Time to Rupture | | | | |
| Acetone | 6.9 MPa (100 psi) | 25 sec R | 11 sec R | 22 sec R | 0.09 hrs R | |
| | 13.8 MPa (2000 psi) | | | | | 2 hrs C&B |
| Ethyl Acetate | 6.9 MPa (1000 psi) | 0.42 hrs R | 0.06 hrs R | 0.05 hrs R | 2 hrs NCNB | |
| | 13.8 MPa (2000 psi) | | | | | 2 hrs C&B |
| Toluene | 6.9 MPa (1000 psi) | 0.85 hrs R | 53 sec R | 2 hrs NCNB | 2 hrs NCNB | |
| | 13.8 MPa (2000 psi) | | | | | 2 hrs NCNB |
| Trichloroethylene | 6.9 MPa (1000 psi) | 7 sec R | 10 sec R | 24 sec R | 0.04 hr R | |
| | 13.8 MPa (2000 psi) | | | | | 0.86 hr R |

C&B = crazed and brittle
NCNB = not crazed, not brittle
R = rupture

Examples 5 to 9

The procedure of blending the indicated polymers was identical to that described in Example 1:

Example 5

75 weight % of Polyketone I

(continued)

25 weight % of Polysulfone I

Example 6

50 weight % of Polyketone I
50 weight % of Polysulfone I

Example 7

35 weight % of Polyketone I
65 weight % of Polysulfone I

Example 8

20 weight % of Polyketone I
80 weight % of Polysulfone I

Example 9

10 weight % of Polyketone I
90 weight % of Polysulfone I

The blends were compression molded into 0.5 mm (20 mil) thick, 10.16 × 10.16 cm (4 × 4 inch) plaques at 360°C in a cavity mold.

The calorimetric data and crystallization rate data were obtained using a Perkin-Elmer DSC-2. the results are listed in Table III. Here it should be noted that the addition of Polysulfone I to Polyketone I slows the crystallization rate of the latter. This manifests itself as a reduction in $T_c$ and an increase in $t_c$ with polysulfone content. Further, the melting point of the polyketone and the glass transition of the polysulfone decrease slightly with the addition of the other component.

TABLE III

Calorimetric and Crystallization Rate Data

| | Polyketone I | 75% Polyketone I 25% Polysulfone I | 50% Polyketone I 50% Polysulfone I | 35% Polyketone I 65% Polysulfone I | 20% Polyketone I 80% Polysulfone I | 10% Polyketone I 90% Polysulfone I |
|---|---|---|---|---|---|---|
| $T_g$ (°C) | 140* | — | 212 | 210 | 207 | 212 |
| $T_m$ (°C) | 337 | 336 | 334 | 334 | 333 | 332 |
| $\Delta H_f$, J/gr (cal/gr) | 33.1 (7.9) | 25.5 (6.1) | 15.9 (3.8) | 10.0 (2.4) | 5.0 (1.2) | 2.5 (0.6) |
| $T_c$ (°C) 10°C/min Cooling | 297 | 291 | 288 | 286 | 282 | |
| $\Delta H_C$, J/gr (cal/gr) | 41.4 (9.9) | 31.4 (7.5) | 18.8 (4.5) | 13.0 (3.1) | 4.6 (1.1) | |
| $T_c$ (°C) 160°C/min cooling | 251 | — | 240 | 232 | | |
| $T_g$ (°C) after cooling at 160°C/min | 142* | — | 208 | 209 | 209 | 209 |
| $t_c$ (seconds) | | | | | | |
| 310°C | 212 | 415 | — | — | — | |
| 300°C | 79 | 137 | 205 | 232 | 345 | |
| 290°C | 51 | 72 | 92 | 100 | 133 | |
| 280°C | — | — | 62 | 65 | 77 | |

*$T_g$ of Polyketone I, other $T_g$ values for polysulfone I rich phase.
$T_g$ of Polysulfone I as molded = 215°C; after quench at 160°C/min $T_g$ = 215°.
$T_g$ and $T_m$ determined with heating rate of 10°C/min. $T_c$ determined at noted cooling rate after heating above $T_m$.
$t_c$ is the time required to reach maximum crystallization rate after heating above Tm and cooling at 160°C/min to designated temperature.

Example 10

50 weight percent of Polyketone II and 50 weight percent of Polysulfone I were blended in a Brabender blender at 390°C. The blend was compression molded at 380°C into 0.5 mm (20 mil) thick, 10.16 × 10.16 cm (4 × 4 inch) plaques. The calorimetric and crystallization rate data were obtained using a Perkin-Elmer DSC-2. Again, a reduction in crystallization rate is seen.

The results are shown in Table IV.

TABLE IV

| Calorimetric and crystallization Rate Data | | | |
|---|---|---|---|
| | | Polyketone II | 50% Polysulfone I 50% Polyketone II |
| $T_m$, °C | heating at | 363 | 360 |
| $\Delta H_f$, J/gr (cal/gr) | 10°C/min | 40.6 (9.7) | 20.1 (4.8) |
| $T_c$, °C | cooling at | 319 | 306 |
| $\Delta H_c$, J/gr (cal/gr) | 10°C/min | 58.2 (13.9) | 25.5 (6.1) |
| $t_c$ (seconds) | | | |
| @ 320°C | | 84 | 280 |
| @ 310°C | | 59 | 145 |
| @ 300°C | | - | 104 |
| @ 290°C | | - | 85 |

Example 11

80 weight percent of Polyketone I was blended with 20 weight percent of Polysulfone II in a Brabender blender at 390°C. The blend was compression molded at 370°C into 0.5 mm (20 mil) thick, 10.16 × 10.16 cm (4 × 4 inch) plaques. The calorimetric and crystallization rate data were obtained using a Perkin-Elmer DSC-2.

The results are shown in Table V.

Example 11 again demonstrates the reduction in crystallization kinetics when a biphenyl containing poly(aryl ether sulfone) is mixed with a crystalline polyketone.

TABLE V

| Calorimetric and Crystallization Rate Data | | | |
|---|---|---|---|
| | | Polyketone I | 80% Polyketone I 20% Polysulfone II |
| $T_m$, °C | heating at | 337 | 337 |
| $\Delta H_f$, J/gr (cal/gr) | 10°C/min | 33.1 (7.9) | 30.1 (7.2) |
| $T_c$, °C | cooling at | 297 | 287 |
| $\Delta H_c$, J/gr (cal/gr) | 10°C/min | 41.5 (9.9) | 36.8 (8.8) |
| $t_c$ (seconds) | | | |
| @ 320°C | | 212 | 720 |
| @ 310°C | | 79 | 214 |
| @ 300°C | | 51 | 109 |
| @ 290°C | | - | 77 |

Control

In order to compare the characteristics of a poly(aryl ether sulfone) not containing a biphenyl unit in the backbone in blends with poly(aryl ether ketone), Control Polysulfone was chosen. A 50/50 blend of Control Polysulfone/Polyketone I was prepared by extrusion at 360°C. Injection molded samples were prepared for mechanical property testing and compression molded samples were prepared for environmental stress rupture resistance. The results of this blend are compared with Example 4, i.e., a 50/50 blend of Polysulfone I and Polyketone I. The environmental stress rupture resistance of the biphenol based Polysulfone I/Polyketone I blend was significantly superior to the Control Polysulfone/Polyketone I blend.

TABLE VI

| | 50% Polysulfone I 50% Polyketone I | Control 50% Polysulfone 50% Polyketone I |
|---|---|---|
| *Mechanical Property Results* | | |
| Tensile Modulus MPa (psi) | 2854.9 (414,000) | 3020.4 (438,000) |
| Tensile Strength MPa (psi) | 79.3 (11,500) | 84.8 (12,300) |
| % Elongation | 90 | 32 |
| Notched Izod Impact Strength Nm/cm (ft-lbs/in of notch) | 4.4 (2.6) | 0.85 (1.6) |
| Tensile Impact Strength Nm/$cm^2$ (ft-lbs/$in^2$) | 29.0 (138) | 34.5 (164) |

| *Environmental Stress Rupture Results* | | | |
|---|---|---|---|
| Environment | Stress | Time to Rupture | |
| Acetone | 13.8 MPa (2000 psi) | 2 hrs C&B | 5 sec R |
| Ethyl Acetate | 13.8 MPa (2000 psi) | 2 hrs C&B | 19 sec R |
| Toluene | 13.8 MPa (2000 psi) | 2 hrs NCNB | 0.24 hrs R |
| Trichloroethylene | 13.8 MPa (2000 psi) | 0.86 hrs R | 0.032 hrs R |

Example 12 - Control

The following polymers were blended in a Brabender blender at 380°C:

| | | |
|---|---|---|
| Example 13: | 50 weight % | Polysulfone I |
| | 50 weight % | Polyketone I |
| Control | 50 weight % | Control Polysulfone |
| | 50 weight % | Polyketone I |

The blends were molded in a specially designed compression mold at 360°C into thrust washers and tested for wear rate in a Falex No. 6 thrust washer testing machine as per ASTM D-3702. The wear results. at three different PV (pressure × velocity) values are listed below:

| | Wear Rate cm/h (inches/hour) | | |
|---|---|---|---|
| PV MPa × m/min = | 2.1 | 5.25 | 10.5 |
| (psi × ft/min) = | (1000) | (2500) | (5000) |
| Example 13 | 16 (6.3) × $10^{-5}$ | 3.0 (1.18) × $10^{-4}$ | 5.3 (2.1) × $10^{-4}$ |
| Control | 18.5 (7.3) × $10^{-5}$ | 3.8 (1.5) × $10^{-4}$ | 11.0 (4.33) × $10^{-4}$ |

Example 13

$33\frac{1}{3}$ weight percent of Polysulffone 1, $33\frac{1}{3}$ weight percent of Polyketone I and $33\frac{1}{3}$ weight percent of Polyetherimide were extruded in a 36/1 LID 2.54 cm (1 inch) single screw extruder at 360°C and injection molded at 380°C into ASTM test bars. The test bars were tested as described in Example 1.

The mechanical property results are listed below in Table VII. It is of interest to point out that the molded specimens were transparent.

TABLE VII

| | |
|---|---|
| Flexural Modulus MPa (psi) | 2951.5 (428,000) |
| Flexural Strength (5% strain) MPa (psi) | 116.5 (16,900) |
| Notched Izod Impact Strength Nm/cm (ft-lbs/in of notch) | 0.85 (1.6) |

TABLE VII (continued)

| | |
|---|---|
| Tensile Impact Strength Nm/cm$^2$ (ft-lbs/in$^2$) | 31.7 (156) |
| Heat Distortion Temperature (°C) 1,82 MPa (264 psi), 3.18 mm (⅛" bar) | 167 |

One of the property deficiencies of poly(aryl ether ketones) is the limited load bearing capabilities above the glass transition temperature (>140 to 220°C), the addition of the biphenyl containing poly(aryl ether sulfones) to poly(aryl ether ketones) will yield increased stiffness thus improved load bearing capabilities. The tensile modulus data listed below demonstrates this behavior.

| | Tensile Modulus MPa (psi) | |
|---|---|---|
| | 175°C | 200°C |
| Polyketone I | 386.2 (56,000) | 289.6 (42,000) |
| 75% Polyketone I/25% Polysulfone | I517.2 (75,000) | 344.8 (50,000) |
| 50% Polyketone I/50% Polysulfone | I731.0 (106,000) | 337.9 (49,000) |
| 35% Polyketone I/65% Polysulfone | I931.0 (135,000) | 710.3 (103,000) |

Example 14

50% by weight of Polysulfone IV and 50% by weight of Polyketone I were mixed in a Brabender blender at 380°C. The blend was compression molded at 380°C in a cavity mold into 0.5 mm (20 mil) thick 10.16 × 10.16 cm (4 × 4 inch) plaques. Strips 0.32 cm (⅛ inch) wide were shear cut from the plaques and tested for 1% secant modulus by a method similar to ASTM D-638; tensile strength and elongation at break according to ASTM D-638; environmental stress rupture resistance as in Examples 1 to 4; and pendulum impact strength. [Pendulum impact strength is measured as follows: A steel pendulum is used, cylindrical in shape with a diameter of 2.1 cm (0.83 inch) and weighting 0.71 kg (1.562 pounds); the striking piece, mounted almost at the top of the pendulum is a cylinder 0.76 cm (0.3 inch) in diameter; film specimens, 10.16 cm (4 inches) long, 0.32 cm (0.125 inch) wide and about 0.025 (1) to 0.75 mm (30 mils) thick are clamped between the jaws of the tester so that the jaws are spaced 2.54 cm (1 inch) apart; the 0.32 cm (0.125 inch) width of the film is mounted vertically; the pendulum is raised to a constant height to deliver 1.53 Nm (1.13 foot pounds) at the specimen; when the pendulum is released the cylindrical striking piece hits the specimen with its flat end, breaks the film, and travels to a measured height beyond; the difference in the recovery height (i.e., the difference in the potential energy of the pendulum at the maximum point of the upswing) represents the energy absorbed by the specimen during the rupture; the impact strength, expressed in Nm (foot-pounds) per cm$^3$ (cubic inch), is obtained by dividing the pendulum energy loss by the volume of the specimen].

The results are given in Table VIII. Also given for comparison are the properties of Polysulfone IV and Polyketone I determined on specimens prepared and tested as described above. Note that the stress crack resistance of the Polysulfone IV is greatly improved with the addition of the polyketone. Also note that the elongation of break of the blend of Example 14 is much greater than that of Polysulfone IV or Polyketone I.

TABLE VIII

| | Polysulfone IV | Polyketone I | Example 15 |
|---|---|---|---|
| 1% secant modulus MPa (psi) | 1.7 (246) | 2.7 (391) | 1.6 (225) |
| Tensile Strength MPa (psi) | 80.0 (11,600) | 91.7 (13,300) | 89.6 (13,000) |
| Elongation at break (%) | 8.2 | 33 | 107 |
| Pendulum Impact Strength Nm/cm$^3$ (ft lbs/in$^3$) | 10.9 (132) | 14.1 (170) | 9.8 (118) |

| *Environmental Stress Rupture Resistance* | | | |
|---|---|---|---|
| Environment | Stress MPa (psi) | Polysulfon IV | Example 15 |
| Ethyl Acetate | 13.8 MPa (2000 psi) | 0.07 hr R | 42.6 hrs NCNB |
| 1,1,1 trichloroethane | 34.5 (5,000) | 0.27 hr R | 1.7 hr R |
| Toluene | 13.8 (2,000) | 1.13 hr R | 64.6 hrs NCNB |

(continued)

| Environmental Stress Rupture Resistance | | | |
|---|---|---|---|
| Environment | Stress MPa (psi) | Polysulfon IV | Example 15 |
| Acetone | 6.9 (1,000) | 22 hr NCNB | 27.1 hrs NCNB |
| R = Rupturea<br>NCNB = Not crazed, not brittle | | | |

Discussion of Results

Blends of poly(aryl ether ketones) and poly(aryl ether sulfones) exhibit excellent mechanical compatibility. The results indicate that a low level of miscibility is observed in these blends as the Tg of the poly(aryl ether sulfone) is slightly decreased and the crystallization kinetics of the poly(aryl ether ketone) are slower. The decrease in Tc (crystallization temperature), the decrease in Tm (crystallization melting point), and the increase in time to maximum crystallization rate (tc) are all indicative of limited miscibility of the poly(aryl ether sulfones) with the poly(aryl ether ketones). Also desired in these blends at intermediate compositions will be good environmental stress rupture resistance. At a weight ratio of 50/50 Polysulfone I/Polyketone I and poly(ether sulfone), i.e., Control Polysulfone/Polyketone I; the Polysulfone I/Polyketone I blend exhibits significantly better environmental stress rupture resistance than the poly(ether sulfone), i.e., Control Polysulfone/Polyketone I blend. The same may be said for the blend of Polysulfone IV/Polyketone I.

Polysulfone II and III which contain a biphenyl unit in the main chain also yield limited miscibility with poly(aryl ether ketone) based on crystallization temperature decrease and increased time to reach maximum crystallization rate.

The addition of poly(aryl ether ketones) to the biphenyl containing poly(aryl ether sulfones) will lead to improved solvent resistance and environmental stress rupture resistance. The addition of the biphenyl containing poly(aryl ether sulfones) to poly(aryl ether ketones) will yield improved toughness and higher modulus (thus load bearing capabilities) in the range between the poly(aryl ether ketone) $T_g$ (140°C to 170°C) and the poly(aryl ether sulfone) $T_g$ (220° to 290°C). This is an important improvement as the load bearing capability of the poly(aryl ether ketones) is limited above the $T_g$.

The aforementioned improvement in toughness is especially true for the blend of Polysulfone IV/Polyketone I (Example 14) where the blend has a much greater elongation at break than either of the constituents. It is postulated that this may be due to the partial miscibility of biphenyl containing polysulfones and poly(aryl ether ketones) which suppresses the crystallinity of the latter. Crystallinity is well known to reduce toughness over the chemically equivalent amorphous material.

It is interesting to note that blends of Polysulfone I and Polyketone I are reasonably transparent (if quenched to prevent crystallization) indicating a high degree of mixing and/or possibly matched refractive indices. The blend of Control Polysulfone and Polyketone I was opaque.

## Claims

1. Molded articles manufactured from blends comprising from 5 to 95 weight percent of a biphenyl containing poly (aryl ether sulfone) and from 95 to 5 weight percent of a poly(aryl ether ketone) containing no ortho hydroxyl groups and having a reduced viscosity of 0.3 to 5.0 dl/g; films and sheets manufactured from a blend of

(a) a poly(aryl ether ketone) containing therein at least 50 weight percent of a repeating unit of formula

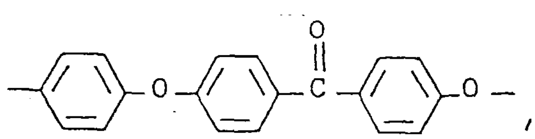

alone or in combination with one or more different repeating units, and

(b) up to 50 weight percent of poly(aryl ether sulfone) having repeating units of the following formulae:

(i) 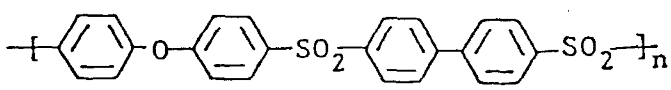

(ii) 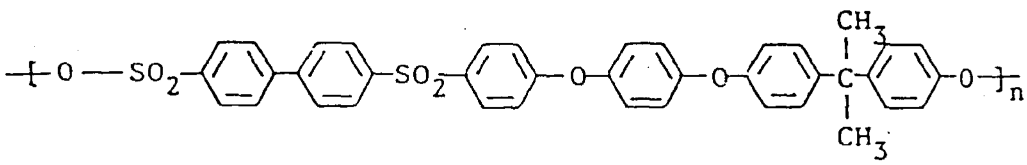

being excluded.

2. Molded articles manufactured from blends as defined in claim 1 wherein the poly(aryl ether sulfone) contains the repeating unit:

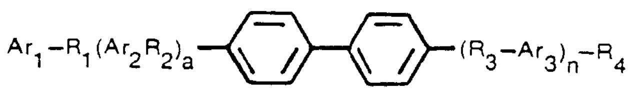

wherein $R_1$ through $R_4$ are -O-, $-SO_2-$,

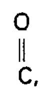

S with the proviso that at least one of $R_1$ through $R_4$ is $-SO_2-$, $Ar_1$ through $Ar_3$ are arylene of 6 to 24 carbon atoms, preferably phenylene or biphenylene; a and n are 0 or 1.

3. Molded articles manufactured from blends as defined in claim 1 wherein the poly(aryl ether sulfone) has the following repeating unit:

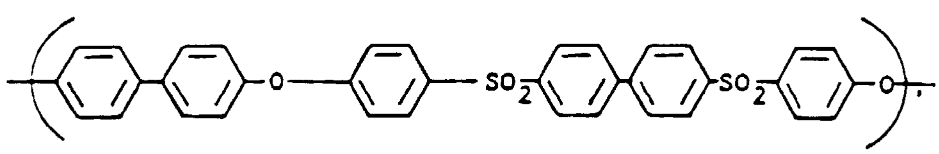

or

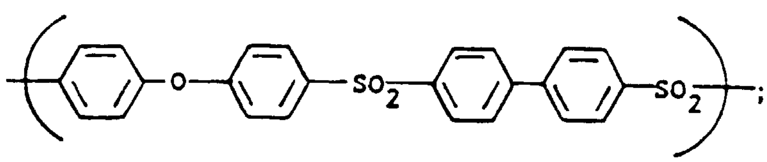

or

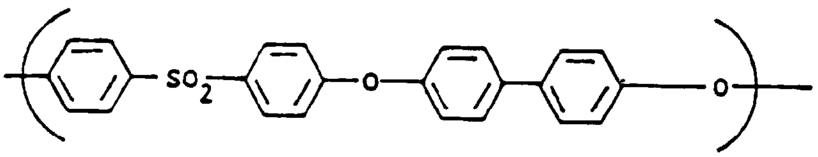

;

or

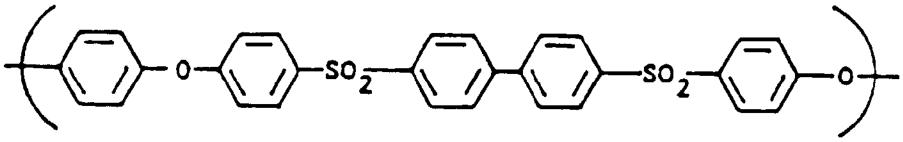

or

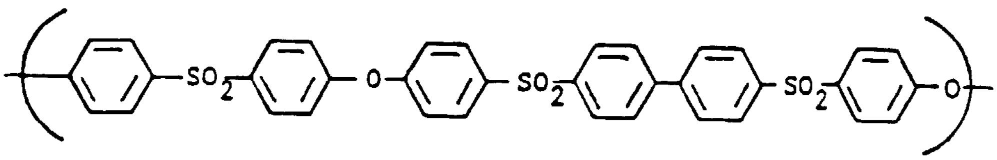

4. Molded articles manufactured from blends as defined in claim 1 wherein the poly(aryl ether sulfone) is a copolymer having the following repeating units:

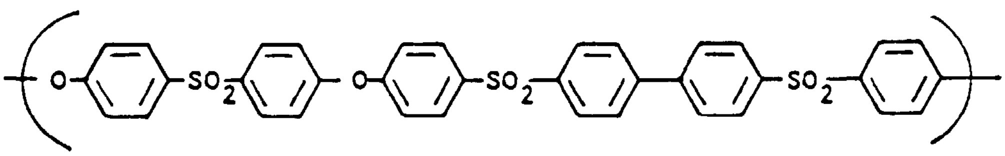

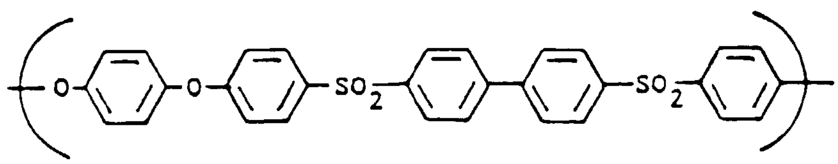

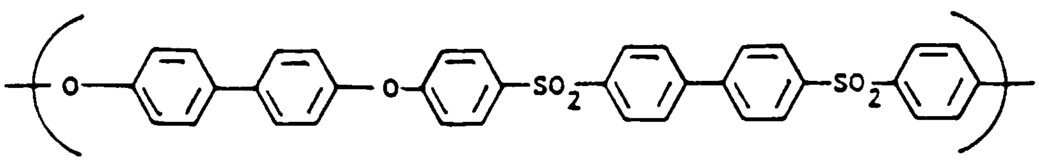

arranged randomly along the chain.

5. Molded articles manufactured from blends as defined in any one of claims 1-4 wherein the poly(aryl ether sulfone) has a repeating unit of the following formula:

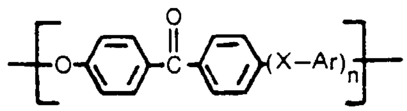

wherein Ar is independently a divalent aromatic radical selected from phenylene, biphenylene or naphthylene, X is independently O,

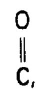

or a direct bond and n is an integer of from 0 to 3; or

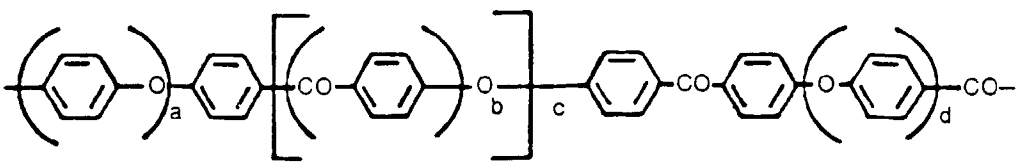

wherein a is an integer of 1 to 4 and b, c, and d are 0 to 1; or

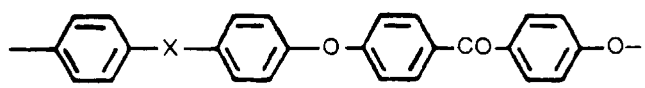

wherein X is independently O,

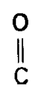

or a direct bond; or

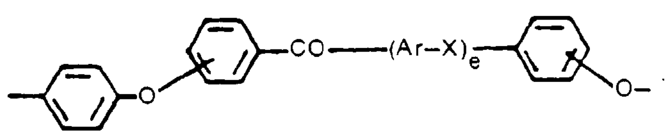

or

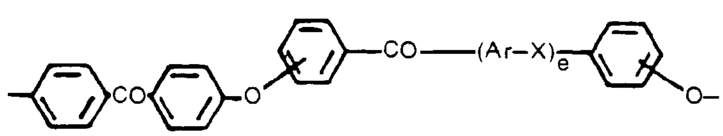

wherein Ar is a divalent aromatic radical selected from phenylene, biphenylene or naphthylene, X is independently O,

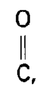

or a direct bond and e is 0 or 1.

**6.** Molded articles manufactured from blends as defined in any one of claims 1-4 wherein the poly(aryl ether ketone) has a repeating unit selected from one or more of the following:

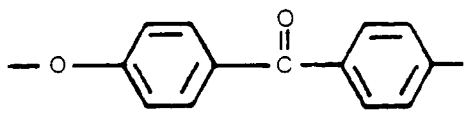

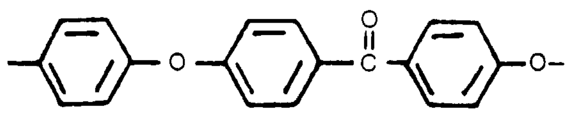

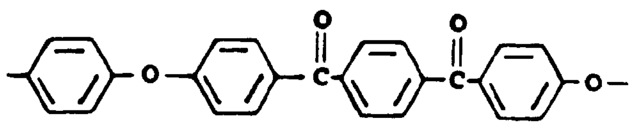

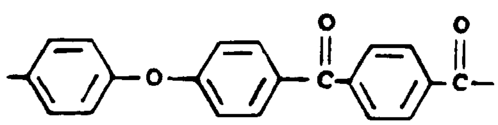

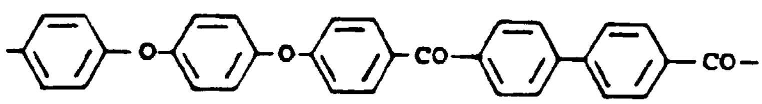

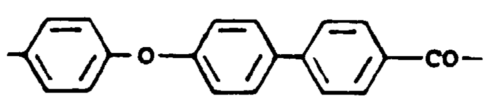

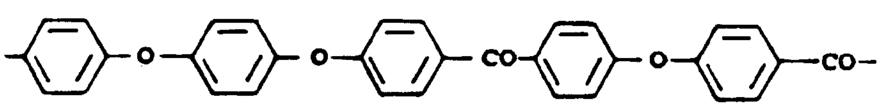

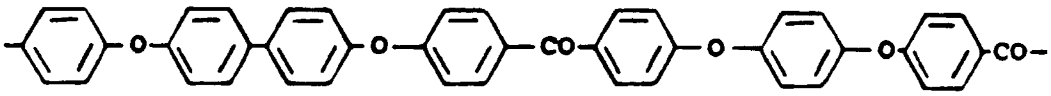

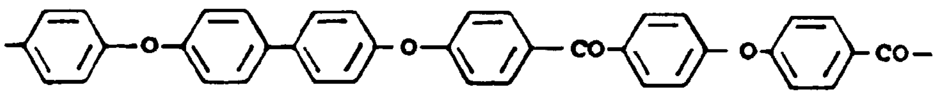

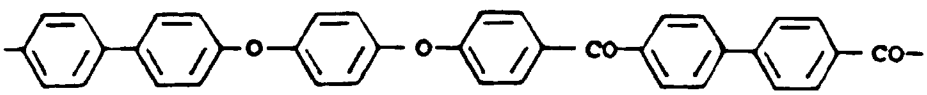

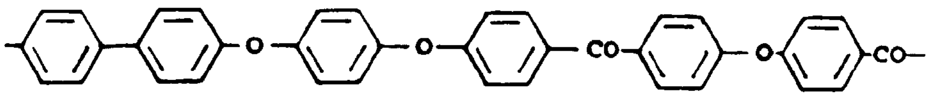

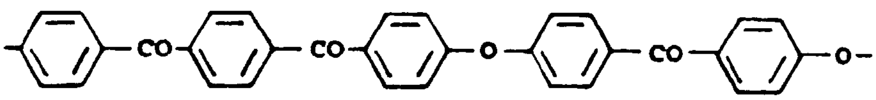

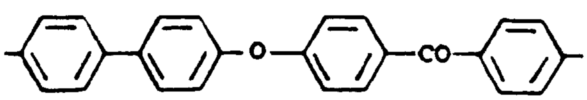

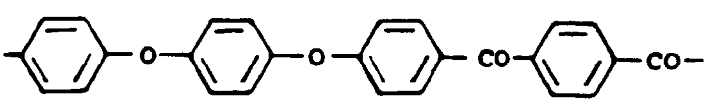

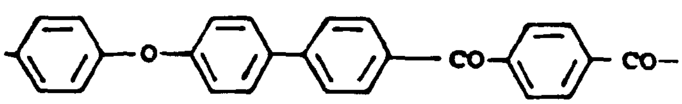

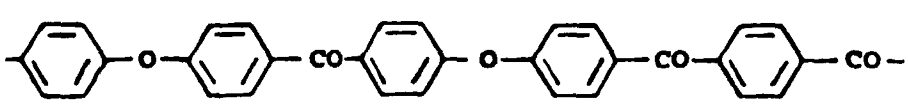 .

## Patentansprüche

1. Formkörper, hergestellt aus Mischungen, die 5 bis 95 Gewichtsprozent eines biphenylhaltigen Poly(arylethersulfons) und 95 bis 5 Gewichtsprozent eines Poly(aryletherketons) ohne o-Hydroxylgruppen und mit einer Viskositätszahl von 0,3 bis 5,0 dl/g enthalten; ausgenommen Filme und Folien, hergestellt aus einer Mischung von

(a) einem Poly(aryletherketon), welches mindestens 50 Gewichtsprozent einer wiederkehrenden Einheit der Formel

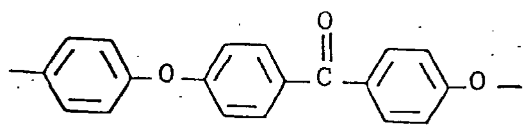

allein oder in Kombination mit einer oder mehreren verschiedenen wiederkehrenden Einheiten enthält, und
(b) bis zu 50 Gewichtsprozent eines Poly(arylethersulfons), welches wiederkehrende Einheiten der folgenden Formeln aufweist:

(i) 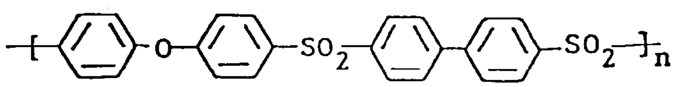

(ii)

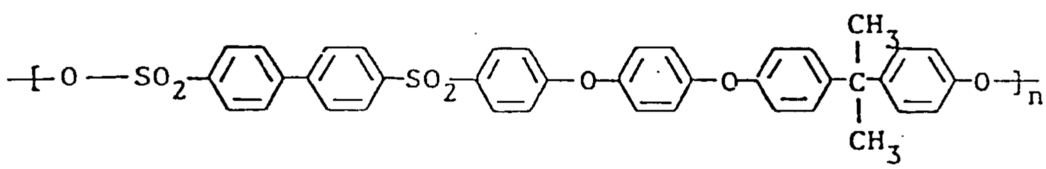

**2.** Formkörper, hergestellt aus Mischungen gemäß Anspruch 1, worin das Poly(arylethersulfon) die wiederkehrende Einheit:

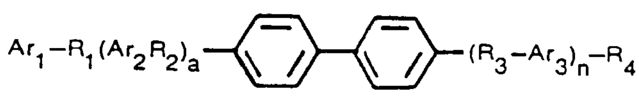

enthält, worin $R_1$ bis $R_4$ -O-, $-SO_2-$,

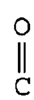

S sind, unter der Bedingung, daß mindestens einer der Substituenten $R_1$ bis $R_4$ $-SO_2-$ ist, $Ar_1$ bis $Ar_3$ Arylen mit 6 bis 24 Kohlenstoffatomen, vorzugsweise Phenyl oder Biphenyl sind; a und n = 0 oder 1 sind.

**3.** Formkörper, hergestellt aus Mischungen gemäß Anspruch 1, worin das Poly(arylethersulfon) die folgende wiederkehrende Einheit aufweist:

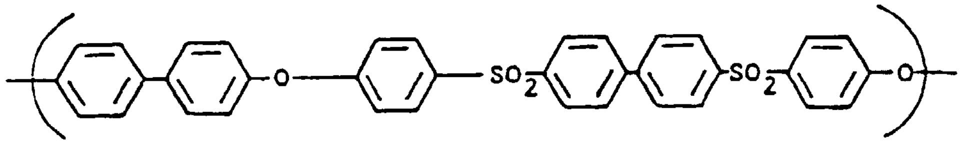

oder

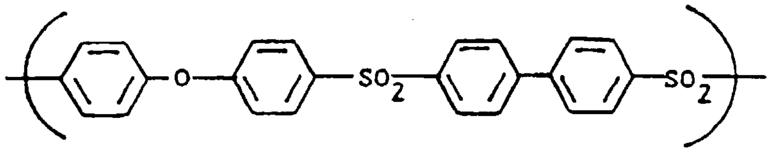

oder

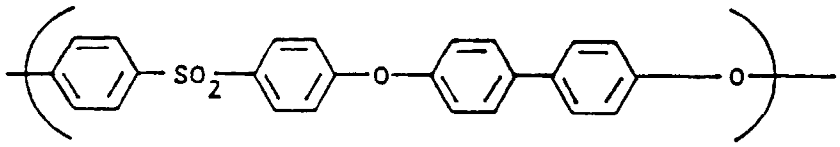

oder

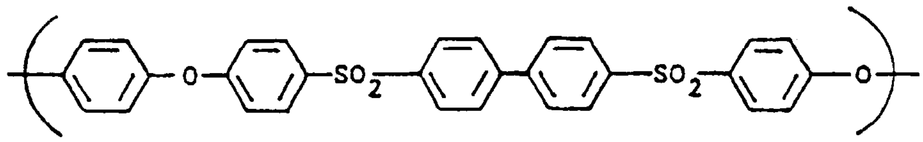

oder

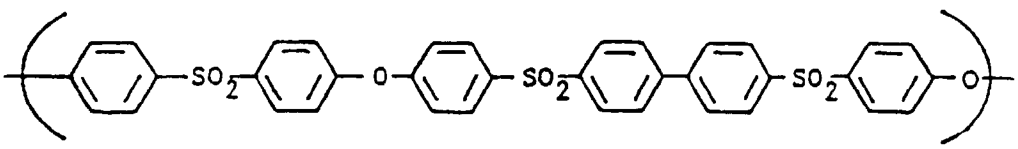

**4.** Formkörper, hergestellt aus Mischungen gemäß Anspruch 1, worin das Poly(arylethersulfon) ein Copolymer mit den folgenden wiederkehrenden Einheiten ist:

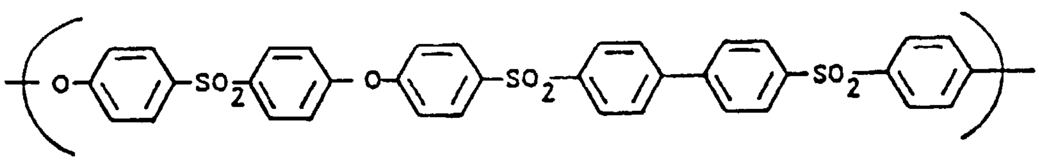

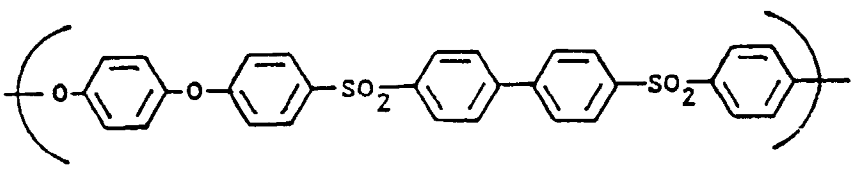

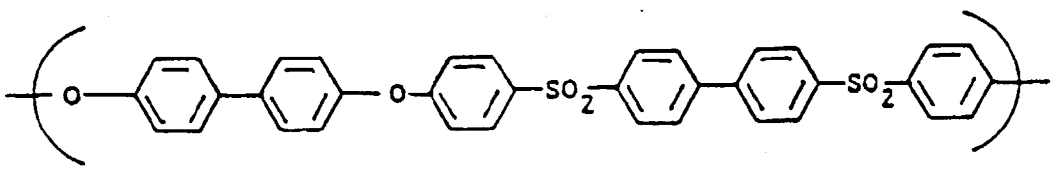

die statistisch entlang der Kette angeordnet sind.

**5.** Formkörper, hergestellt aus Mischungen gemäß irgendeinem der Ansprüche 1 bis 4, worin das Poly(arylethersulfon) wiederkehrende Einheiten der folgenden Formel enthält:

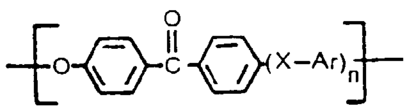

worin Ar unabhängig ein zweiwertiger aromatischer Rest, ausgewählt aus Phenylen, Biphenylen oder Naphthylen ist, X unabhängig O,

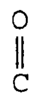

oder eine direkte Bindung und n eine ganze Zahl von 0 bis 3 ist; oder

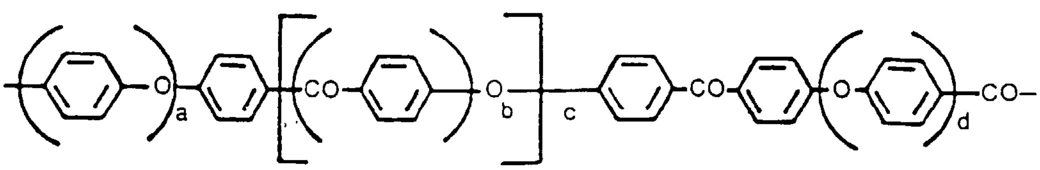

worin a eine ganze Zahl von 1 bis 4 und b, c und d 0 bis 1 sind; oder

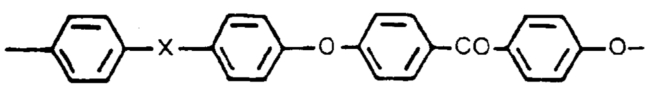

worin X unabhängig O,

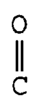

oder eine direkte Bindung ist; oder

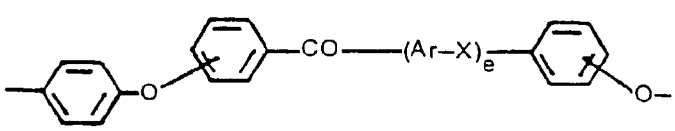

oder

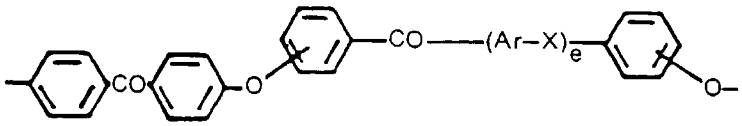

worin Ar ein zweiwertiger aromatischer Rest, ausgewählt aus Phenylen, Biphenylen oder Naphthylen ist, X unabhängig O,

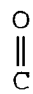

oder eine direkte Bindung und e 0 oder 1 ist.

**6.** Formkörper, hergestellt aus Mischungen gemäß irgendeinem der Ansprüche 1 bis 4, worin das Poly(aryletherketon) eine wiederkehrende Einheit, ausgewählt aus einer oder mehreren der folgenden aufweist:

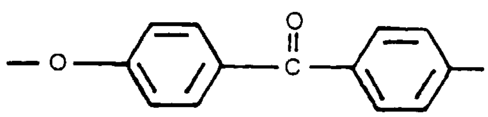

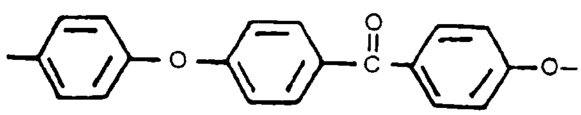

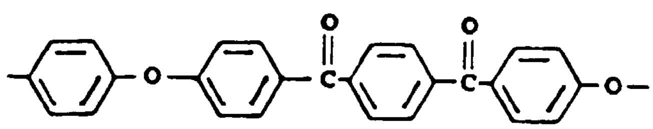

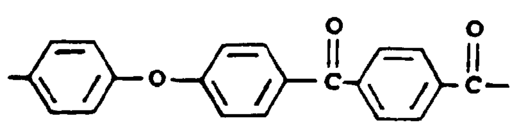

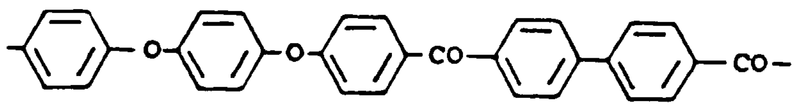

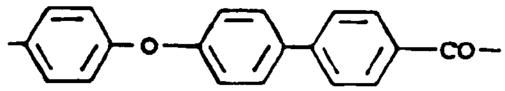

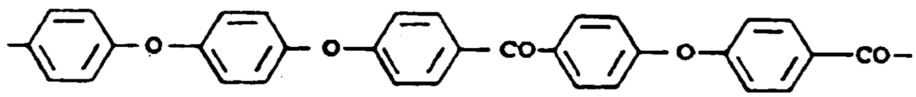

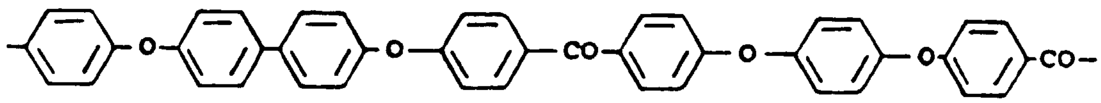

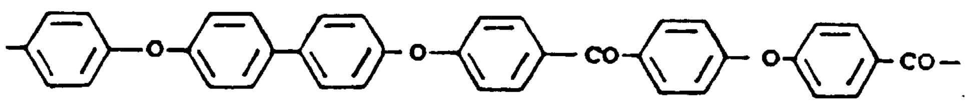

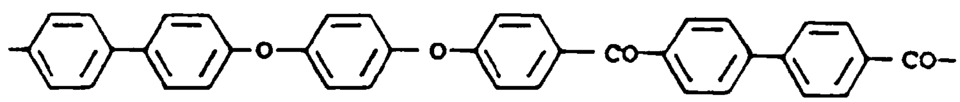

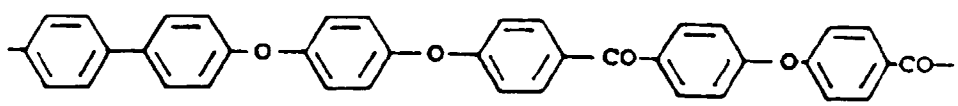

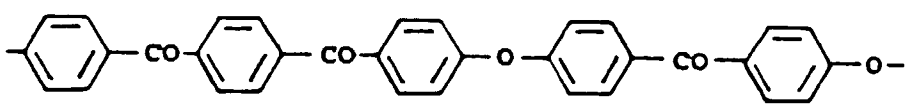

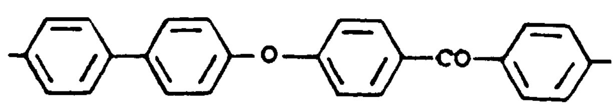

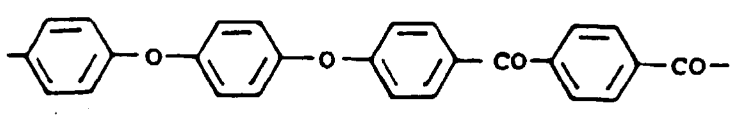

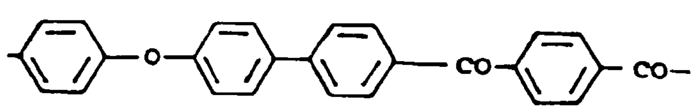

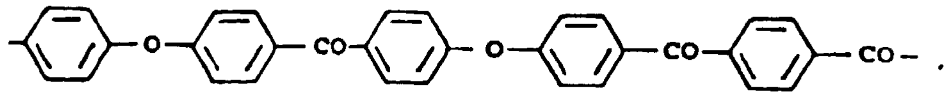

## Revendications

1. Articles moulés produits à partir de mélanges comprenant 5 à 95 % en poids d'une poly(aryléthersulfone) contenant un motif biphényle et 95 à 5 % en poids d'une poly(aryléthercétone) ne contenant aucun groupe hydroxyle en position ortho et ayant une viscosité réduite de 0,3 à 5,0 dl/g ; les films et les feuilles produits à partir d'un mélange :

   (a) d'une poly(aryléthercétone) renfermant au moins 50 pour cent en poids d'un motif répété de formule

   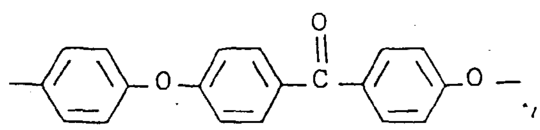

   seul ou en association avec un ou plusieurs motifs répétés différents, et
   (b) d'une quantité allant jusqu'à 50 pour cent en poids d'une poly(aryléthersulfone) comprenant des motifs répétés répondant aux formules suivantes :

   (i) 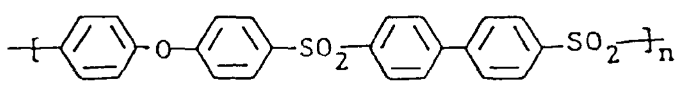

   (ii)

   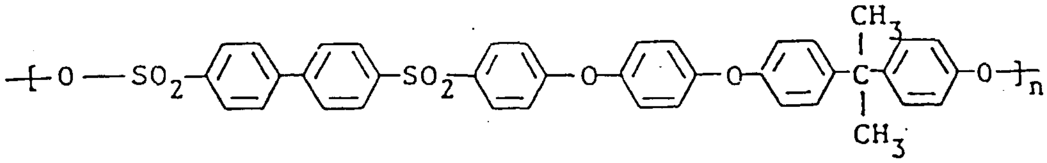

   étant exclus.

2. Articles moulés produits à partir de mélanges suivant la revendication 1, dans lesquels la poly(aryléthersulfone) contient le motif répété :

   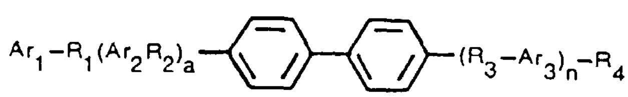

   dans lequel les substituants $R_1$ à $R_4$ représentent -O-, $-SO_2-$,

   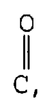

   S, sous réserve qu'au moins l'un des substituants $R_1$ à $R_4$ représente un groupe $-SO_2-$, les substituants $Ar_1$ à $Ar_3$ représentent des groupes arylène de 6 à 24 atomes de carbone, de préférence le groupe phénylène ou biphénylène ; a et n ont la valeur 0 ou 1.

3. Articles moulés produits à partir de mélanges suivant la revendication 1, dans lesquels la poly(aryléthersulfone)

renferme le motif répété suivant :

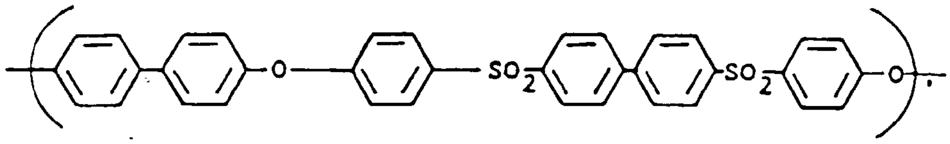

ou

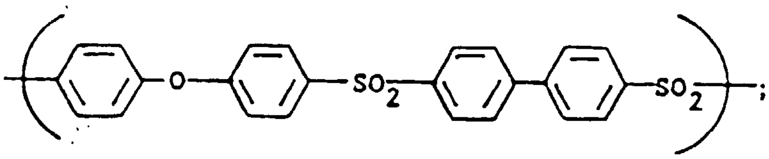

ou

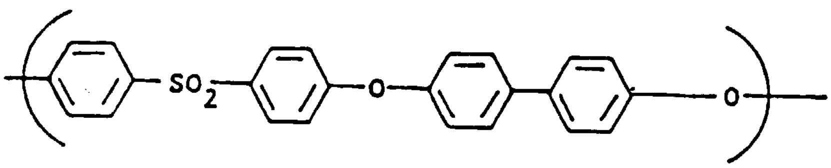

;

ou

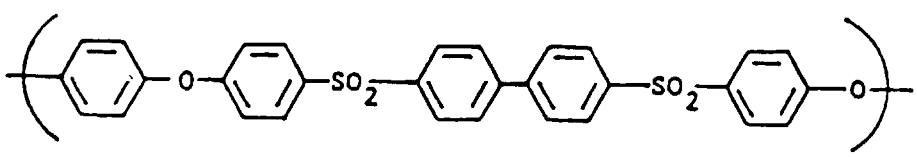

ou

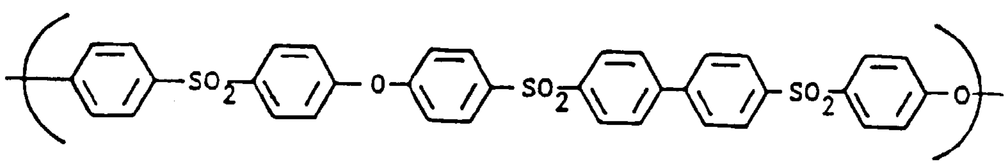

**4.** Articles moulés produits à partir de mélanges suivant la revendication 1, dans lesquels la poly(aryléthersulfone) est un copolymère renfermant les motifs répétés :

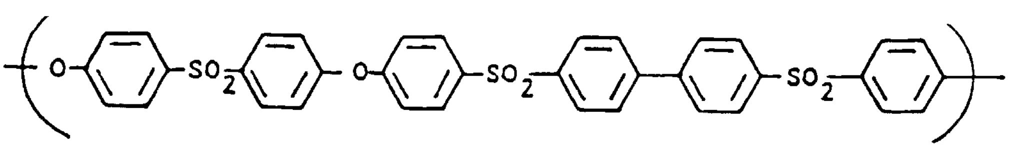

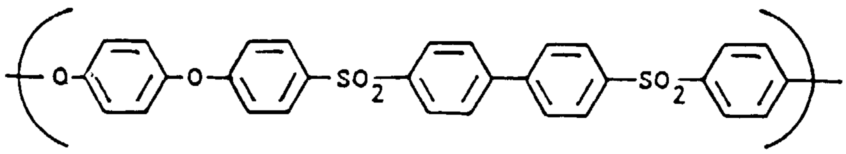

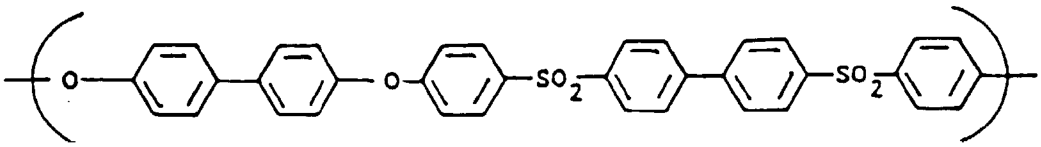

disposés de manière aléatoire le long de la chaîne.

**5.** Articles moulés produits à partir de mélanges suivant l'une quelconque des revendications 1 à 4, dans lesquels la poly(aryléthersulfone) renferme un motif répété de formule suivante :

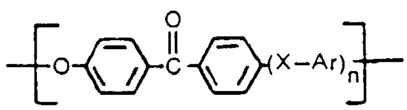

dans laquelle Ar représente indépendamment un radical aromatique divalent choisi entre les groupes phénylène, biphénylène et naphtylène, X représente indépendamment 0,

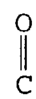

ou une liaison directe, et n est un nombre entier de 0 à 3 ; ou

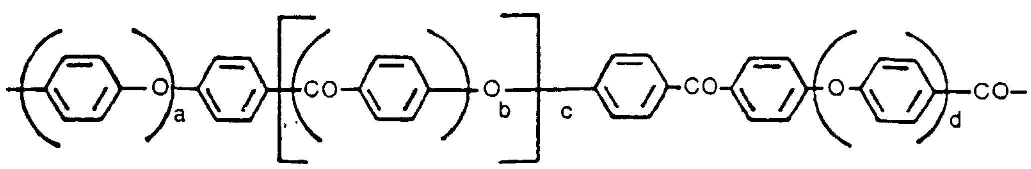

dans laquelle a est un nombre entier de 1 à 4 et b, c et d ont une valeur de 0 à 1 ; ou

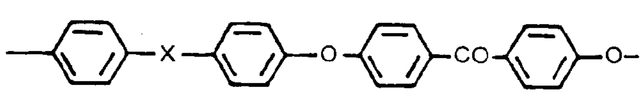

dans laquelle X représente indépendamment O,

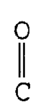

ou une liaison directe ; ou

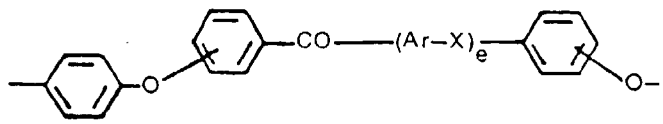

ou

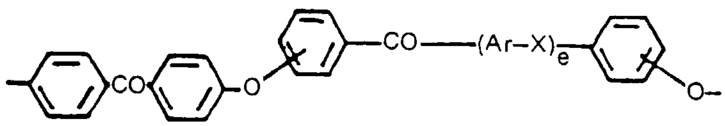

dans laquelle Ar représente un radical aromatique divalent choisi entre les groupes phénylène, biphénylène et naphtylène, X représente indépendamment, O,

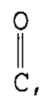

une liaison directe et e a la valeur 0 ou 1.

**6.** Articles moulés produits à partir de mélanges suivant l'une quelconque des revendications 1 à 4, dans lesquels la poly(aryléthercétone) renferme un motif répété choisi entre un ou plusieurs des motifs suivants :

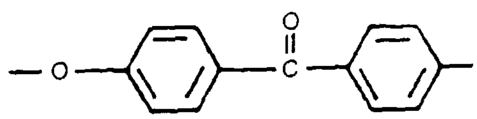

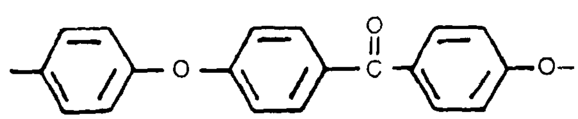

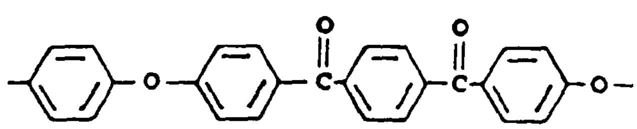

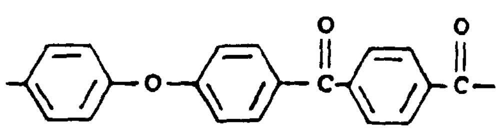

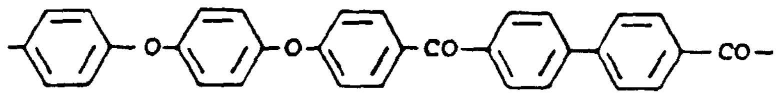

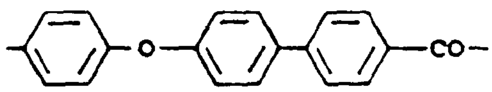

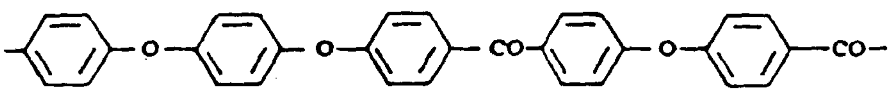

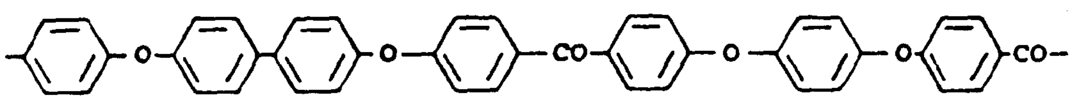

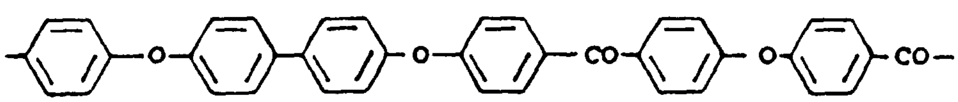

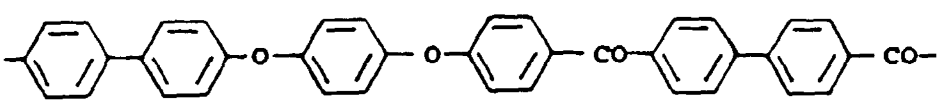

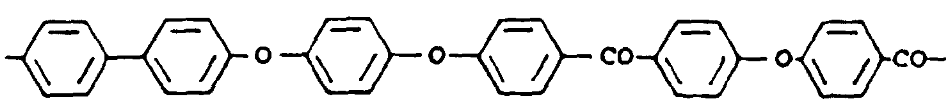

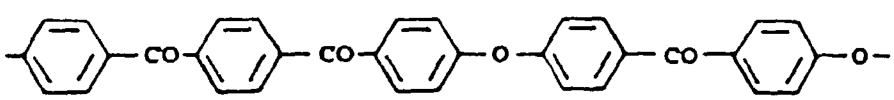

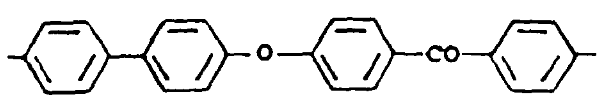

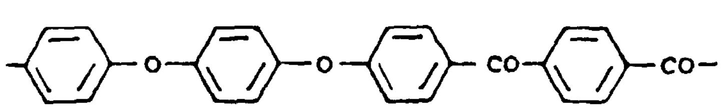

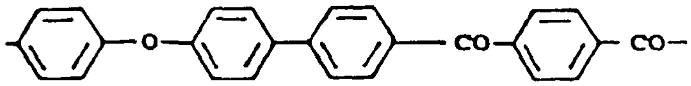

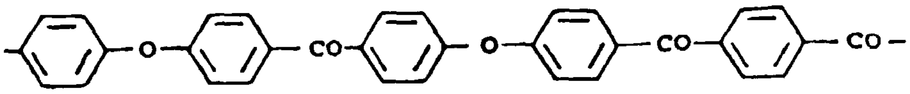

,